(19) Europäisches Patentamt
European Patent Office
Office européen des brevets

(11) **EP 4 180 267 B1**

(12) **EUROPEAN PATENT SPECIFICATION**

(45) Date of publication and mention
of the grant of the patent:
**22.04.2026 Bulletin 2026/17**

(21) Application number: **20944083.3**

(22) Date of filing: **01.09.2020**

(51) International Patent Classification (IPC):
**B60M 3/00** (2006.01)    **B60M 3/04** (2006.01)
**H02H 1/04** (2006.01)    H02H 9/00 (2006.01)

(52) Cooperative Patent Classification (CPC):
**B60M 3/04; B60M 3/00; H02H 1/043;** H02H 9/002

(86) International application number:
**PCT/CN2020/112786**

(87) International publication number:
**WO 2022/007158 (13.01.2022 Gazette 2022/02)**

(54) **METHOD AND DEVICE FOR GROUND OVER-PHASE SUPPRESSION OF MAGNETIZING INRUSH CURRENT OF TRACTION TRANSFORMER**

VERFAHREN UND VORRICHTUNG ZUR UNTERDRÜCKUNG DES MASSENÜBERPHASENSTROMS EINES MAGNETISIERUNGSEINSCHALTSTROMS EINES TRAKTIONSTRANSFORMATORS

PROCÉDÉ ET DISPOSITIF DE SUPPRESSION EN SURPHASE DE TERRE DE COURANT D'APPEL MAGNÉTISANT DE TRANSFORMATEUR DE TRACTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2020 CN 202010654109**

(43) Date of publication of application:
**17.05.2023 Bulletin 2023/20**

(73) Proprietor: **CRRC Zhuzhou Electric Locomotive Research
Institute Co., Ltd.
Zhuzhou, Hunan 412001 (CN)**

(72) Inventors:
 • **WANG, Yue**
  **Zhuzhou, Hunan 412001 (CN)**
 • **MEI, Wenqing**
  **Zhuzhou, Hunan 412001 (CN)**
 • **WEN, Yuliang**
  **Zhuzhou, Hunan 412001 (CN)**
 • **ZHANG, Zhixue**
  **Zhuzhou, Hunan 412001 (CN)**
 • **LI, Cheng**
  **Zhuzhou, Hunan 412001 (CN)**

 • **PENG, Yun**
  **Zhuzhou, Hunan 412001 (CN)**
 • **HU, Jingyu**
  **Zhuzhou, Hunan 412001 (CN)**
 • **FU, Gang**
  **Zhuzhou, Hunan 412001 (CN)**
 • **WU, Yi**
  **Zhuzhou, Hunan 412001 (CN)**
 • **CHEN, Xin**
  **Zhuzhou, Hunan 412001 (CN)**
 • **ZHOU, Zhenbang**
  **Zhuzhou, Hunan 412001 (CN)**

(74) Representative: **PPR AG
BGZ
Rotenbodenstrasse 12
9497 Triesenberg (LI)**

(56) References cited:
EP-A1- 3 007 352     CN-A- 102 097 785
CN-A- 103 552 487     CN-A- 106 740 283
CN-A- 107 579 510     CN-A- 109 606 209
CN-A- 110 091 761     CN-A- 110 907 742
CN-A- 111 319 517     JP-A- 2000 203 316
JP-A- H10 271 610     JP-B2- 5 305 636

**Description**

**Field of the Invention**

The present disclosure relates to the field of rectification technology, and in particular to a method and a device for ground passing neutral section suppression of magnetizing inrush current of a traction transformer.

**Background of the Invention**

A vehicle-mounted traction transformer is an important device in a traction power supply system, and the safety of the vehicle-mounted traction transformer is directly related to the stability of the entire system.

JPH10271610A discloses a device designed for controlling the power supply switchover of AC electric railways, having the ability to limit overcurrent when the changeover switch at the terminal station side is closed.

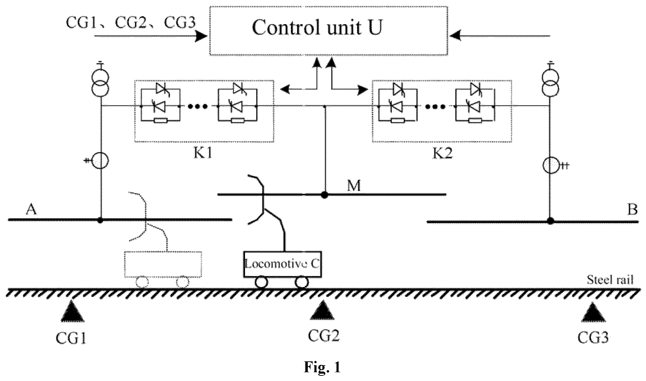

Fig. 1 is a schematic view of a main circuit topology of a ground auto-passing neutral section apparatus with power electronic switches, and the basic working principle thereof is briefly introduced by taking driving of a locomotive in a forward direction as an example as follows.

At Step1: a neutral section M was originally in a no-power state, and when a locomotive C is driving to a CG1 position, a control unit U determines that the locomotive C is driving in a forward direction through position detection and logic processing. The control unit U controls a first power electronic switch (i.e., a thyristor valve block) K1 to act, such that the neutral section M is electrically connected to a front-phase feeding section A (i.e., a first feeding section), and in this case, a voltage of the neutral section M is exactly the same as that of the front-phase feeding section A.

At Step 2: when the locomotive C is driving to a CG2 position, the control unit U receives a position detection signal, and prepares to perform a switch process as follows. The first power electronic switch K1 is firstly controlled to be off, such that the neutral section M is disconnected from the front-phase feeding section A (in this case, the neutral section M is in the no-power state). After a period of time (i.e., a real no-power duration for which the locomotive passes a neutral section), a second power electronic switch K2 is controlled to act, such that the neutral section M is electrically connected to a rear-phase feeding section B (i.e., a second feeding section), and in this case, the voltage of the neutral section M is exactly the same as that of the rear-phase feeding section B.

At Step 3: when the locomotive is driving to a CG3 position, the control unit U controls the second power electronic switch K2 to be off, such that the neutral section M is disconnected from the rear-phase feeding section B, and in this case, the neutral section M recovers to be in the no-power state.

The power electronic passing neutral section apparatus which utilizes the thyristor valve block as the switch can solve the problems caused by a conventional vacuum switch, and at the same time, can significantly reduce the speed loss and the driver's operation frequency caused by the locomotive passing the neutral section. However, in the actual operation, when the power electronic passing neutral section apparatus switches the power supply voltage from the front-phase feeding section A to the rear-phase feeding section B (there is usually a phase difference between the voltage of the front-phase feeding section A and the voltage of the rear-phase feeding section B), a voltage of an input terminal of the traction transformer of the locomotive is equivalent to have a sudden change in phase in a short time, which may easily provoke the magnetizing inrush current of the traction transformer, and the magnetizing inrush current may even reach several times the rated current, causing damage to the traction transformer, and thus resulting in low safety and low operation reliability of the power electronic passing neutral section apparatus.

**Summary of the Invention**

The main objective of the present application is to provide a method and a device for ground passing neutral section suppression of magnetizing inrush current of a traction transformer, so as to solve the problems of low safety and low operation reliability of a power electronic passing neutral section apparatus in the prior art. According to the invention there is provided a method for ground passing neutral section suppression of magnetising inrush current of a traction transformer as defined in claim 1 and an apparatus for ground passing neutral section suppression of magnetising inrush current of a traction transformer as defined in claim 6.

Further developments of the invention are the subject of the dependent claims.

With respect to the above problems, the present application provides a method for ground passing neutral section suppression of magnetizing inrush current of a traction transformer, and the method includes: acquiring a first phase angle of a voltage of a second feeding section that is lagging behind a phase angle of a voltage of a first feeding section, a second phase angle of a primary current of the traction transformer that is lagging behind the phase angle of the voltage of the first feeding section when a locomotive is powered by the first feeding section, and a off moment of a first power electronic switch corresponding to the first feeding section; determining a no-power time interval of the traction transformer according to the first phase angle, the second phase angle and a preset magnetic flux variable threshold; and determining a on moment of a second power electronic switch corresponding to the second feeding section according to the off moment of the first power electronic switch and the no-power time interval, such that a magnetic flux of the traction transformer is located within a preset magnetic flux range in a case where the second power electronic switch is on; wherein the preset magnetic flux range is determined according to a maximum tolerable magnetizing inrush current of the traction transformer.

The present application further provides a device for ground passing neutral section suppression of magnetizing inrush current of a traction transformer, and the device includes a memory and a processor; wherein a computer program is stored on the memory, and when the computer program is executed by the processor, the steps of any one of the above methods for ground passing neutral section suppression of magnetizing inrush current of a traction transformer are implemented.

The present application further provides a ground passing neutral section system including: an acquisition device, at least one ground passing neutral section apparatus and the above described device for ground passing neutral section suppression of magnetizing inrush current of a traction transformer; wherein each ground passing neutral section apparatus includes a first feeding section, a second feeding section, a first power electronic switch, and a second power electronic switch; the acquisition device is configured to acquire a voltage of the first feeding section, a voltage of the second feeding section and a primary current of the traction transformer; and the device for ground passing neutral section suppression of magnetizing inrush current of a traction transformer is configured to implement steps of the method for ground passing neutral section suppression of magnetizing inrush current of a traction transformer according to any one of claims 1 to 5.

The present application further provides a storage medium on which a computer program is stored according to claim 9, and when the computer program is executed by a processor, steps of any one of above methods for ground passing neutral section suppression of magnetizing inrush current of a traction transformer are implemented.

## Brief Description of the Drawings

Fig. 1 is a schematic view of a main circuit topology of a ground auto-passing neutral section apparatus with power electronic switches;
Fig. 2 is a schematic view of a circuit model of a traction transformer;
Fig. 3 is a flowchart of a method for ground passing neutral section suppression of magnetizing inrush current of a traction transformer of the present application;
Fig. 4 is a flowchart for determining a no-power time interval;
Fig. 5 is a schematic view of a simulation waveform of a primary current of a traction transformer when an optimal no-power time interval is adopted;
Fig. 6 is a schematic view of a simulation waveform of a primary current of a traction transformer when a random no-power time interval is adopted; and
Fig. 7 is a schematic view of a structure of an embodiment of a device for ground passing neutral section suppression of magnetizing inrush current of a traction transformer of the present application.

## Detailed Description of the Embodiments

Hereafter, the implementations of the present application will be illustrated in detail in conjunction with the accompanying drawings and the embodiments, via which, the implementation process of how to apply the technical means to solve the technical problems and then achieve the technical effects of the present application may be fully understood and thus implemented. It should be noted that, the various embodiments in the present application and the various features in the various embodiments may be combined with each other as long as they are not conflicting, and the constituted technical solutions are encompassed within the protection scope of the present application as defined in the attached claims.

The principle for magnetizing inrush current of a traction transformer is described as follows.

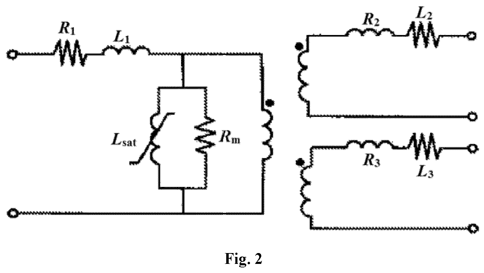

Fig. 2 is a schematic view of a circuit model of a traction transformer, in which resistors $R_1 \sim R_3$ and inductors $L_1 \sim L_3$ are used to represent short-circuit impedance characteristic of respective windings, and a resistors $R_m$ and a saturated inductor $L_{sat}$ are used to simulate active loss and magnetization characteristics of an iron core of a traction transformer.

In a specific implementation, the magnetizing inrush current is generated due to the fact that a flux curve of the traction transformer is located in a saturated area of a magnetization curve of the iron core of the traction transformer. A magnitude of a magnetic flux of the traction transformer determines a magnitude of the magnetizing inrush current, and the magnetic flux of the traction transformer is directly related to a voltage of the traction transformer. Accordingly, there is a calculation formula (1) as follows:

$$u = \frac{d\phi}{dt} + R_1 i + L_1 \frac{di}{dt} \quad (1)$$

where $u$ is a voltage of the traction transformer, $\Phi$ is a magnetic flux of the traction transformer, $R_1$ is a short-circuit resistance value of a primary winding of the traction transformer, $L_1$ is a short-circuit inductance value of the primary winding of the traction transformer, and $i$ is a current passing through the traction transformer.

Considering that the magnetizing inrush current of the traction transformer is mainly affected by the change of magnetic flux, the calculation formula (1) may be simplified, by ignoring some items in the calculation formula (1), as a calculation formula (2) as follows:

$$u = \frac{d\phi}{dt} \quad (2)$$

Assuming that the traction transformer is switching on at a moment (t=0) and a voltage, $u = U_m \sin(\omega t + \alpha)$, is applied to a primary side of the traction transformer, a calculation formula (3) may be obtained from the calculation formula (2), as follows:

$$\begin{cases} \phi = -\phi_m \cos(\omega t + \alpha) + \phi_0 \\ \phi_m = \dfrac{U_m}{\omega} = \dfrac{U_m}{2\pi f} \end{cases} \quad (3)$$

where $\Phi_m$ is a maximum magnetic flux of the traction transformer, $\Phi_0$ is a magnetic flux variable quantity of the traction transformer, $U_m$ is a maximum voltage of the traction transformer, and $\alpha$ is an initial phase angle of a switching-on voltage.

Depending on the nature that the magnetic flux cannot change suddenly, a calculation formula (4) may be obtained as follows:

$$\Phi = \Phi_m \cos(\omega t + \alpha) + \Phi_r \quad (4)$$

where $\Phi_r$ is an instantaneous residual magnetism of the traction transformer before switching on.

The magnitude and positivity and negativity of the magnetic flux variable quantity $\Phi_0$ of the traction transformer is directly related to the residual magnetism $\Phi_r$ and the initial phase angle $\alpha$ of the switching-on voltage. The initial phase angle $\alpha$ of the switching-on voltage is a random value depending on different switching-on moments. Due to the loss of the traction transformer, $\Phi_0$ is attenuated over time, with an attenuation constant related to the magnitude of an impedance of the primary side, a capacity of the traction transformer, a material of the iron core, etc.

The traction transformer generally has a saturated magnetic flux about 1.15-1.5 ($\Phi_{sat} \approx$ 1.15-1.5). A running voltage of the traction transformer is stipulated in a power system to not exceed 10 % of its rated voltage, and a corresponding maximum magnetic flux $\Phi_m$ = 1.1 is stipulated in a power system, such that the magnetic flux of the traction transformer in a stable state will not exceed the saturated magnetic flux $\Phi_{sat}$, and the magnetizing inrush current is very small.

At an initial moment of the switching on, due to the magnetic flux variable quantity $\Phi_0$ of the traction transformer, the magnetic flux curve may be located in the saturation area of the magnetization curve, resulting in the magnetizing inrush current. In a most serious case, a maximum value of the magnetic flux may reach more than twice the magnetic flux in a stable state, and thus the magnetizing inrush current will increase sharply.

Embodiment 1

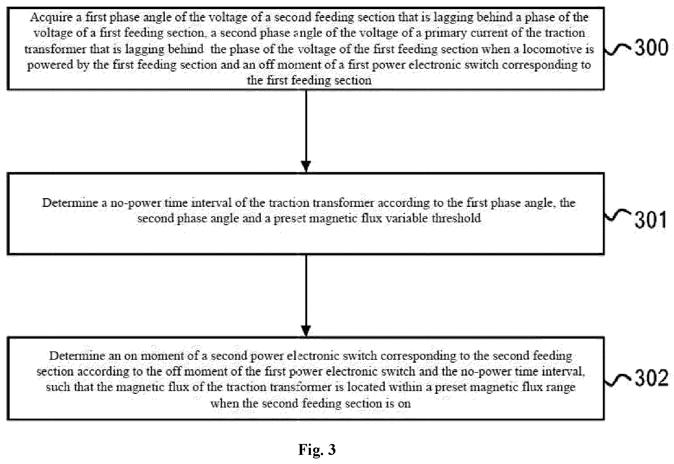

Fig. 3 is a flowchart of a method for ground passing neutral section suppression of magnetizing inrush current of a traction transformer of the present application. As shown in Fig. 3, the method for the ground passing neutral section suppression of the magnetizing inrush current of the traction transformer includes the following steps 300 to 302.

At 300, a off moment of a first power electronic switch corresponding to a first feeding section, a first phase angle and a second phase angle are acquired. The first phase angle is a phase angle of a voltage of a second feeding section that is lagging behind a phase angle of a voltage of the first feeding section, and the second phase angle is a phase angle of a primary current of the traction transformer that is lagging behind the phase angle of the voltage of the first feeding section when a locomotive is powered by the first feeding section.

In a specific implementation, the voltage of the first feeding section, the voltage of the second feeding section and the primary current of the traction transformer may be acquired by utilizing acquisition devices, such as a voltage sensor, a current sensor, etc., thereby acquiring the first phase angle of the voltage of the second feeding section that is lagging behind the phase angle of the voltage of the first feeding section and the second phase angle of the primary current of the traction transformer that is lagging behind the phase angle of the voltage of the first feeding section when the locomotive is powered by the first feeding section. And, when the power electronic switch K1 is controlled to be off, an off moment of the power electronic switch is recorded.

At 301, a no-power time interval of the traction transformer is determined according to the first phase angle, the second phase angle and a preset magnetic flux variable threshold.

In an implementation, the implementation process of this step includes the following steps S10 to S30.

At S10, a per-unit value of magnetic flux variable quantity of the traction transformer corresponding to an on moment of the second power electronic switch is determined according to the first phase angle of the voltage of the second feeding section that is lagging behind the phase angle of the voltage of the first feeding section, the second phase angle of the voltage of the primary current of the traction transformer that is lagging behind the phase angle of the first feeding section when the locomotive is powered by the first feeding section, and a set prediction no-power time interval.

In an implementation, the first phase angle, the second phase angle and the set prediction no-power time interval may be entered into a pre-constructed calculation formula for the per-unit value of magnetic flux variable quantity, so as to obtain the per-unit value of magnetic flux variable quantity of the traction transformer.

In this embodiment, a calculation formula (5) for the per-unit value of magnetic flux variable quantity is as follows:

$$\left|\phi_0\right|_{pu} = \left|\cos\left(\omega t_0 - \alpha_{AB} + 2\pi\frac{t_{no}}{T_s}\right) - \cos(\omega t_0)\right| \quad (5)$$

where, $\omega t_0 = \varphi_A$ or $\omega t_0 = \pi + \varphi_A$

where $\left|\Phi_0\right|_{pu}$ is the per-unit value of magnetic flux variable quantity of the traction transformer, $t_0$ is the off moment of the first power electronic switch, $\alpha_{AB}$ is the first phase angle of the voltage of the second feeding section that is lagging behind the phase angle of the voltage of the first feeding section, $t_{no}$ is the prediction no-power time interval, $T_s$ is a fundamental period of a power supply grid voltage, and $\varphi_A$ is the second phase angle of the voltage of the primary current of the traction transformer that is lagging behind the phase angle of the voltage of the first feeding section when the locomotive is powered by the first feeding section.

In an implementation, the above calculation formula (5) for the per-unit value of magnetic flux variable quantity may be constructed according to the following way.

Assuming that the voltages of the feeding sections passed before and after in the neutral section by the locomotive in a driving direction are a voltage $U_A$ of the first feeding section and a voltage $U_B$ of the second feeding section, respectively, a following calculation formula (6) is obtained:

$$\begin{cases} U_A = U_m \sin(\omega t) \\ U_B = U_m \sin(\omega t - \alpha_{AB}) \end{cases} \quad (6)$$

In the calculation formula (6), the differences of voltage amplitude and frequency of the front phase and rear phase feeding sections in the power supply grid have been ignored. According to the supply of power to the neutral section of domestic common railway and in consideration of the uplink and downlink situations, the common values of the first phase angle $\alpha_{AB}$ of the voltage of the second feeding section that is lagging behind the phase angle of the voltage of the first feeding section include 0, $\pm \pi/3$ ($\pm 60°$), $\pm \pi/2$ ($\pm 90°$) and $\pm 2\pi/3$ ($\pm 120°$). However, due to the variety of the supply of power in the railway and even a situation that the feeding sections at two sides of the neutral section are powered by different administrations of power supply, the first phase angle $\alpha_{AB}$ of the voltage of the second feeding section that is lagging behind the phase angle of the voltage of the first feeding section should have a value range of $\alpha_{AB} \in [-\pi, +\pi]$.

When the distortion of the primary current of the traction transformer is not considered, the primary current of the traction transformer when the locomotive is powered by the first feeding section may be represented as a calculation formula (7):

$$I_A = I_m \sin(\omega t - \varphi_A) \quad (7)$$

where $\varphi_A$ is the phase angle of the voltage of the primary current that is lagging behind the phase angle of the power supply grid voltage, $\varphi_A \in [-\pi/2, +\pi/2]$, and $\cos(\varphi_A)$ is a power factor.

Generally, before passing the neutral section, the locomotive is considered to be in a normal, stable operation state for a relatively long time under the voltage of the first feeding section, and the magnetic flux variable quantity $\Phi_0$ of the traction transformer has been attenuated to 0, that is, the magnetic flux of the iron core of the traction transformer will change according to sinusoidal wave. Then, there will be a calculation formula (8):

$$\Phi = -\Phi_\mathrm{m} \cos(\omega t) \quad (8)$$

Assuming that at the moment of $t=t_0$, the ground auto-passing neutral section apparatus with power electronic switches disconnects the neutral section M from the voltage $U_A$ of the first feeding section, and in this case, the residual magnetism of the traction transformer is calculated by a calculation formula (9):

$$\begin{cases} \phi_\mathrm{r} = -\phi_\mathrm{m} \cos(\omega t_0) \\ \omega t_0 - \varphi_A = 0 \text{ or } \pi \end{cases} \quad (9)$$

After that, after the no-power time interval, the ground auto-passing neutral section apparatus with power electronic switches connects the neutral section M to the voltage $U_B$ of the second feeding section, and a calculation formula (10) may be obtained according to the calculation formula (4):

$$\phi_0 = \phi_\mathrm{m} \cos\left(\omega t_0 - \alpha_{AB} + 2\pi \frac{t_\mathrm{no}}{T_\mathrm{s}}\right) - \phi_m \cos(\omega t_0) \quad (10)$$

After the neutral section M is connected to the voltage $U_B$ of the second feeding section, a real-time magnetic flux of the iron core of the traction transformer is calculated as shown by a calculation formula (11), where $\Phi_0$ is gradually attenuated over time. Since the saturated magnetic flux of the traction transformer is generally about 1.15~1.5 ($\Phi_\mathrm{sat} \approx$ 1.15-1.5), that is, when the amplitude of the $\Phi_0$ is larger than 0.5, the magnetizing inrush current of the traction transformer will be inevitably provoked.

$$\Phi = -\Phi_\mathrm{m} \cos(\omega t - \alpha_{AB}) + \Phi_0 \quad (11)$$

For the calculation formula (10), when $\omega t_0 = \varphi_A$ or $\omega t_0 = \varphi_A + n\pi$, the value of $\Phi_0$ is invariable, and the value of $\Phi_0$ is co-determined by $\alpha_{AB}$, $t_\mathrm{no}$ and $\varphi_A$. $|\Phi_0|_\mathrm{pu}$ is recorded as the per-unit value of magnetic flux variable quantity, and then the calculation formula (5) is obtained.

According to the principle of generating the magnetizing inrush current of the traction transformer, only if the per-unit value $|\Phi_0|$pu of $\Phi_0$ is as small as possible, the magnetizing inrush current generated, when the ground auto-passing neutral section apparatus with power electronic switches power off to and then power on again to the primary side of the traction transformer, may be suppressed. Accordingly, in this embodiment, the magnetic flux variable threshold $\lambda_\mathrm{pu}$ may be analyzed and preset according to actual needs. In this way, after the prediction no-power time interval $t_\mathrm{no}$ is set, the per-unit value $|\Phi_0|_\mathrm{pu}$ of the magnetic flux variable quantity of the traction transformer corresponding to the on moment of the second power electronic switch may be obtained, and the obtained per-unit value $|\Phi_0|_\mathrm{pu}$ of the magnetic flux variable quantity of the traction transformer is compared with a preset magnetic flux variable threshold $\lambda_\mathrm{pu}$, to obtain a comparison result. The preset magnetic flux variable threshold $\lambda_\mathrm{pu}$ is preferably 0.5.

At S20, if the per-unit value of magnetic flux variable quantity of the traction transformer is greater than the preset magnetic flux variable threshold, return to the step S10 after the prediction no-power time interval is added with a preset iterative incremental duration and is updated.

In this embodiment, if the per-unit value of the magnetic flux variable quantity of the traction transformer is greater than the preset magnetic flux variable threshold, it indicates that a relatively large magnetizing inrush current will be generated after the second power electronic switch is controlled to be on according to the prediction no-power time interval set at this time, and the prediction no-power time interval set at this time is not an optimal prediction no-power time interval. Thus, the step S10 may be returned to, after the prediction no-power time interval is add with the preset iterative incremental duration and is updated.

At S30, the prediction no-power time interval is taken as the no-power time interval, if the per-unit value of magnetic flux variable quantity of the traction transformer is less than or equal to the preset magnetic flux variable threshold.

If the per-unit value of the magnetic flux variable quantity of the traction transformer is less than or equal to the preset magnetic flux variable threshold, it indicates that a relatively small magnetizing inrush current or even no magnetizing inrush current will be generated after the second power electronic switch is controlled to be on according to the prediction no-power time interval set at this time, and accordingly, the prediction no-power time interval may be taken as the no-power time interval. In this way, not only the magnetizing inrush current of the traction transformer is ensured in an acceptable range, but also the no-power time interval is enabled to be short as possible, so as to reduce the speed loss of a train when passing the neutral section.

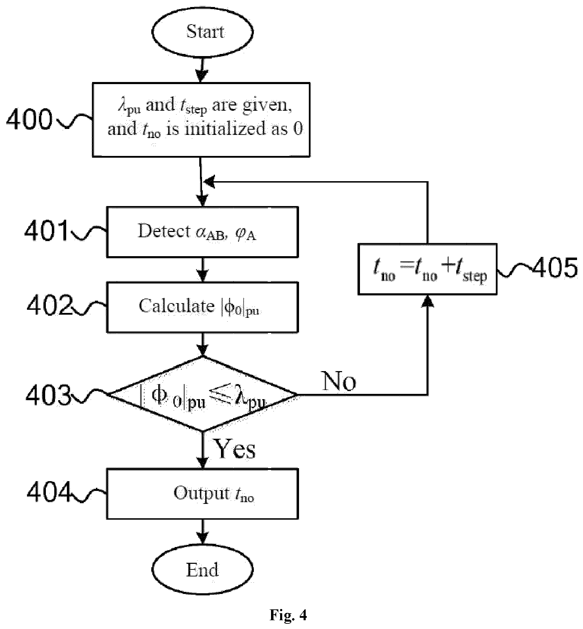

In an implementation, Fig. 4 is a flowchart for determining a no-power time interval. As shown in Fig. 4, the steps for determining the no-power time interval are as follows.

At 400, the preset magnetic flux variable threshold $\lambda_{pu}$ and the preset iterative incremental duration $t_{step}$ are given, and the prediction no-power time interval is initialized as 0.

At 401, the first phase angle $\alpha_{AB}$ of the voltage of a second feeding section that is lagging behind a phase angle of the voltage of the first feeding section and the second phase angle $\varphi_A$ of the voltage of the primary current of the traction transformer that is lagging behind the phase angle of the voltage of the first feeding section when a locomotive is powered by the first feeding section.

At 402, the per-unit value $|\Phi_0|_{pu}$ of the magnetic flux variable quantity of the traction transformer is calculated.

At 403, whether $|\Phi_0|_{pu} \leq \lambda_{pu}$ is satisfied, if so, the step 404 is performed, and if not, the step 405 is performed.

At 404, the prediction no-power time interval $t_{no}$ is output.

At 405, the step 401 is returned to, if $t_{no} = t_{no} + t_{step}$.

At 302, an on moment of the second power electronic switch corresponding to the second feeding section is determined according to the off moment of the first power electronic switch and the no-power time interval, such that the magnetic flux of the traction transformer is located within a preset magnetic flux range when the second power electronic switch is on.

In a specific implementation, after the no-power time interval of the traction transformer is determined, the on moment of the second power electronic switch corresponding to the second feeding section may be determined according to the off moment of the first power electronic switch and the no-power time interval, such that the magnetic flux of the traction transformer is located within the preset magnetic flux range when the second power electronic switch is on. In an implementation, the on moment of the second power electronic switch is a moment preferably equal to a sum of the off moment of the first power electronic switch and the no-power time interval. The preset magnetic flux range is determined according to a maximum tolerable magnetizing inrush current of the traction transformer. The preset magnetic flux range is preferably 1.15 ~ 1.5.

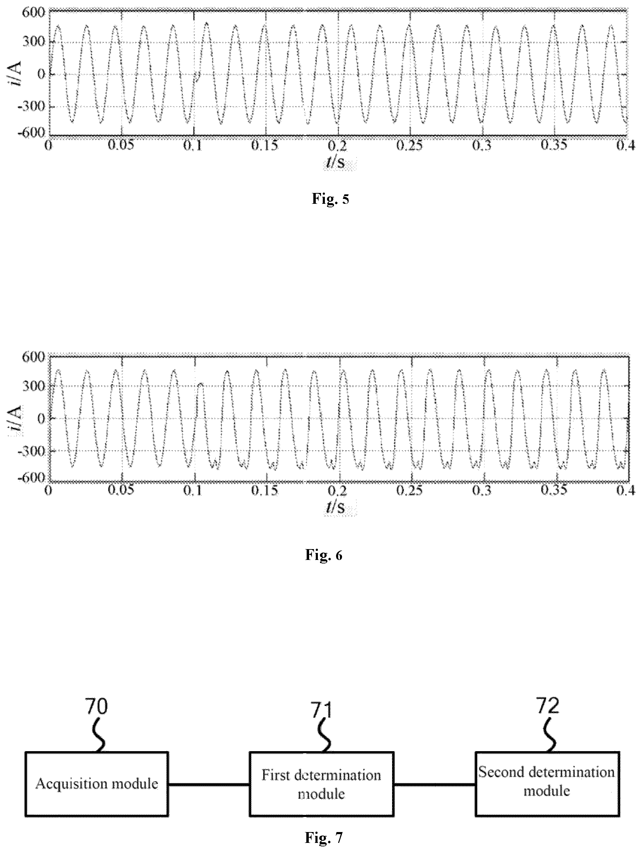

In order to verify the technical solution of the present application, a simulation waveform of the primary current of a train traction transformer when an optimal no-power time interval is adopted, and a simulation waveform of the primary current of a train traction transformer when a random no-power time interval is adopted, are shown in Fig. 5 and Fig. 6, respectively according to the technical solution of the present application. Fig. 5 is a schematic view of a simulation waveform of a primary current of a traction transformer when an optimal no-power time interval is adopted, and Fig. 6 is a schematic view of a simulation waveform of a primary current of a traction transformer when a random no-power time interval adopted. It can be seen from Fig. 5 and Fig. 6 that, when the optimal no-power time interval is adopted for the second power electronic switch, the magnetizing inrush current may be completely suppressed, but when the random no-power time interval is adopted for the second power electronic switch, a serious magnetizing inrush current will occur.

In the method for ground passing neutral section suppression of magnetizing inrush current of the traction transformer of this embodiment, the first phase angle of the voltage of the second feeding section that is lagging behind the phase angle of the voltage of the first feeding section, the second phase angle of the voltage of the primary current of the traction transformer that is lagging behind the phase angle of the first feeding section when the locomotive is powered by the first feeding section and the off moment of the first power electronic switch corresponding to the first feeding section are acquired; the no-power time interval of the traction transformer is determined according to the first phase angle, the second phase angle and the preset magnetic flux variable threshold; and the on moment of the second power electronic switch corresponding to the second feeding section is determined according to the off moment of the first power electronic switch and the no-power time interval, such that the magnetic flux of the traction transformer is located within the preset magnetic flux range when the second power electronic switch is on, which realizes that the optimal no-power time interval is obtained on-line, thereby not only ensuring that the magnetizing inrush current of the traction transformer is within an acceptable range, but also enabling the no-power time interval to be short as possible, so as to reduce the speed loss of the train when passing the neutral section. By adoption of the technical solution of the present application, the safety and operation reliability of the power electronic passing neutral section apparatus may be enhanced.

It should be noted that the method of the embodiments of the present application may be executed by a single device, such as a computer, a server, etc. The method of the embodiment may also be applied in distributed scenarios, which may be accomplished by a plurality of devices cooperating with each other. In the case of such distributed scenarios, one of the plurality of devices may only execute one or more steps in the method of the embodiments of the present application, and the plurality of devices will interact with each other to accomplish the method.

Embodiment 2

FIG. 7 is a schematic view of a structure of an embodiment of a device for ground passing neutral section suppression of magnetizing inrush current of a traction transformer of the present application. As shown in FIG. 7, the device for the ground passing neutral section suppression of magnetizing inrush current of the traction transformer of the present application includes an acquisition module 70, a first determination module 71 and a second determination module 72.

The acquisition module 70 is configured to acquire a first phase angle of a voltage of a second feeding section that is lagging behind a phase angle of the voltage of a first feeding section, a second phase angle of a voltage of a primary current of the traction transformer that is lagging behind the phase angle of the voltage of the first feeding section when a locomotive is powered by the first feeding section and an off moment of a first power electronic switch corresponding to the first feeding section.

The first determination module 71 is configured to determine a no-power time interval of the traction transformer, according to the first phase angle, the second phase angle and a preset magnetic flux variable threshold.

In an implementation, the first determination module 71 determines the no-power time interval of the traction transformer according to the following steps.

At S10, a per-unit value of magnetic flux variable quantity of the traction transformer corresponding to the on moment of a second power electronic switch is determined according to the first phase angle, the second phase angle, and a prediction no-power time interval.

In an implementation, the first phase angle, the second phase angle and the prediction no-power time interval may be substituted into a pre-constructed calculation formula for the per-unit value of magnetic flux variable quantity, so as to obtain the per-unit value of magnetic flux variable quantity of the traction transformer

In this embodiment, the calculation formula for the per-unit value of magnetic flux variable quantity refers to the calculation formula (5). The magnetic flux variable threshold is 0.5. The first phase angle has a value range of $[-\pi, +\pi]$.

At S20, if the per-unit value of magnetic flux variable quantity of the traction transformer is greater than the preset magnetic flux variable threshold, the step S10 is returned to, after the set prediction no-power time interval is added with a preset iterative incremental duration and is updated.

At S30, the prediction no-power time interval is taken as the no-power time interval, if the per-unit value of magnetic flux variable quantity of the traction transformer is less than or equal to the preset magnetic flux variable threshold.

The second determination module 72 is configured to determine a on moment of the second power electronic switch corresponding to the second feeding section according to the off moment of the first power electronic switch and the no-power time interval, such that the magnetic flux of the traction transformer is located within a preset magnetic flux range when the second power electronic switch is on.

The preset magnetic flux range is determined according to a maximum tolerable magnetizing inrush current of the traction transformer.

It should be noted that, the device of the above described embodiment is used to implement the corresponding method in the above described embodiment, and achieves the beneficial effects of the corresponding method embodiment, which will not be repeated herein.

Embodiment 3

The present application further provides a device for ground passing neutral section suppression of magnetizing inrush current of a traction transformer, and the device includes a memory and a processor.

A computer program is stored on the memory, and when the computer program is executed by the processor, the steps of the method for ground passing neutral section suppression of magnetizing inrush current of the traction transformer according to the above described embodiment are implemented.

Embodiment 4

The present application further provides a ground passing neutral section system including an acquisition device, at least one ground passing neutral section apparatus and the device for ground passing neutral section suppression of magnetizing inrush current of the traction transformer according to the above described embodiment.

Each ground passing neutral section apparatus includes a first feeding section, a second feeding section, a first power electronic switch, and a second power electronic switch.

The acquisition device is configured to acquire a voltage of the first feeding section, a voltage of the second feeding section and a primary current of the traction transformer.

The device for ground passing neutral section suppression of magnetizing inrush current of the traction transformer is configured to implement the steps of the method for ground passing neutral section suppression of magnetizing inrush current of the traction transformer as described in the above embodiment.

Embodiment 5

In order to solve the above technical problems existing in the prior art, the embodiment of the present application provides a storage medium.

The storage medium provided by the embodiment of the present application has a computer program stored thereon, and when the computer program is executed by a processor, the steps of the method for ground passing neutral section suppression of magnetizing inrush current of the traction transformer according to the above described embodiment are implemented.

It should be understood that the same or similar parts in the above described embodiments may refer to each other, and the contents that have not been illustrated in some embodiments may refer to the same or similar contents in other embodiments.

It should be noted that, in the description of the present application, the terms "first", "second" and the like are only intended for description, but should not be interpreted to indicate or imply the relative importance. In addition, in the description of the present application, unless otherwise indicated, the wording "a plurality of" means at least two.

Any process or method described in the flowchart or described in other ways may be understood to mean a module, a fragment or a part including one or more codes of executable instructions for implementing specific logical functions or the steps of the process. It should be understood by those skilled in the art to which the embodiments of the present application pertain that, the scope of the preferred implementations of the present application encompasses other implementations in which the functions are performed according to the involved functions in a substantially simultaneous order or in a reverse order, without according to the order as shown or discussed.

It should be understood that each part of the present application may be implemented by using a hardware, a software, a firmware, or the combination thereof. In the above described implementations, a plurality of steps or methods may be implemented by using the software or the firmware stored in a memory and executed by an appropriate instruction execution system. For example, if the hardware is used for implementation, as in the other embodiments, any one of the following technologies known in the art or the combination thereof may be used for implementation: a discrete logic circuit with a logic gate circuit for implementing logic function to data signal, an application-specific integrated circuit with suitable combinational logic gate circuits, a programmable door array (PGA), and a field programmable door array (FPGA), and the like.

One of ordinary skill in the art may understand that all or a part of the steps for implementing the above described embodiment methods may be accomplished by a program which instructs a relevant hardware. The program may be stored in a computer readable storage medium. When the program is executed, one of the steps of the method embodiments or the combination thereof is implemented.

In addition, the individual functional units in various embodiments of the present application may be integrated in one processing module 32, or may be physically separated, or two or more units thereof may be integrated in one module. The above described integrated module may be implemented in the form of hardware or in the form of software function module. If the integrated module is implemented as a software function module and sold or used as an independent product, it may also be stored in a computer readable storage medium.

The above mentioned storage medium may be a read-only memory, a magnetic disk, or an optical disk, etc.

In the expressions of the description, the expressions of the terms referring to "one embodiment", "some embodiments", "example", "specific examples" or "some examples" mean that the specific features, structures, materials or characteristics described in combination with such an embodiment or example are included in at least one embodiment or example of the present application. In this description, the schematic expressions of the above described terms does not necessarily refer to the same embodiment or example. Moreover, the specific features, structures, materials or characteristics described may be combined in an appropriate way in any one or more embodiment(s) or example(s).

Although the implementations of the present application are disclosed as above, the implementations are only used to facilitate the understanding of the present application, and are not intended to limit the present application. Those skilled in the art to which the embodiments of the present application pertains may make any modifications and changes in implementation forms and details without departing from the scope of the present application, but the scope of protection of the present application must be subject to the scope defined in the attached claims.

**Claims**

1. A method for ground passing neutral section suppression of magnetizing inrush current of a traction transformer, comprising:

acquiring a first phase angle, a second phase angle and an off moment of a first power electronic switch corresponding to a first feeding section, wherein the first phase angle is a phase angle of a voltage of a second feeding section that is lagging behind a phase angle of a voltage of a first feeding section, and the second phase angle is a phase angle of a primary current of the traction transformer that is lagging behind the phase angle of the voltage of the first feeding section when a locomotive is powered by the first feeding section;

determining a no-power time interval of the traction transformer, according to the first phase angle, the second phase angle and a preset magnetic flux variable threshold; and

determining a on moment of a second power electronic switch corresponding to the second feeding section, according to the off moment of the first power electronic switch and the no-power time interval, such that a magnetic flux of the traction transformer is located within a preset magnetic flux range in a case where the second power electronic switch is on;

wherein the preset magnetic flux range is determined according to a maximum tolerable magnetizing inrush current of the traction transformer;

**characterised in that**

determining a no-power time interval of the traction transformer, according to the first phase angle, the second phase angle and a preset magnetic flux variable threshold comprises:

S10, determining a per-unit value of magnetic flux variable quantity of the traction transformer corresponding to the on moment of the second power electronic switch, according to the first phase angle, the second phase angle and a set prediction no-power time interval;

S20, returning to the S10 after the prediction no-power time interval is added with a preset iterative incremental duration and is updated, in a case where the per-unit value of magnetic flux variable quantity of the traction transformer is greater than a preset magnetic flux variable threshold; and

S30, taking the prediction no-power time interval as the no-power time interval, if the per-unit value of magnetic flux variable quantity of the traction transformer is less than or equal to the preset magnetic flux variable threshold.

2. The method for ground passing neutral section suppression of magnetizing inrush current of the traction transformer according to claim 1, wherein

determining a per-unit value of magnetic flux variable quantity of the traction transformer corresponding to the on moment of the second power electronic switch, according to the first phase angle, the second phase angle and a set prediction no-power time interval, comprises:

entering the first phase angle, the second phase angle, and the prediction no-power time interval into a pre-constructed calculation formula for the per-unit value of magnetic flux variable quantity, to obtain the per-unit value of magnetic flux variable quantity of the traction transformer.

3. The method for ground passing neutral section suppression of magnetizing inrush current of the traction transformer according to claim 2, wherein the calculation formula for the per-unit value of magnetic flux variable quantity is as follows:

$$\left|\phi_0\right|_{\text{pu}} = \left|\cos(\omega t_0 - \alpha_{\text{AB}} + 2\pi \frac{t_{\text{no}}}{T_{\text{s}}}) - \cos(\omega t_0)\right|$$

wherein $\omega t_0 = \varphi_A$ or $\omega t_0 = \pi + \varphi_A$

wherein $|\Phi_0|_{\text{pu}}$ is the per-unit value of magnetic flux variable quantity of the traction transformer, $t_0$ is the off moment of the first power electronic switch, $\alpha_{\text{AB}}$ is the first phase angle, $t_{\text{no}}$ is the prediction no-power time interval, $T_{\text{s}}$ is a fundamental period of the power supply grid voltage, and $\varphi_A$ is the second phase angle.

4. The method for ground passing neutral section suppression of magnetizing inrush current of the traction transformer according to claim 1, wherein the magnetic flux variable threshold is 0.5.

5. The method for ground passing neutral section suppression of magnetizing inrush current of the traction transformer according to claim 1, wherein the first phase angle has a value range of [-π, +π].

6. An apparatus for ground passing neutral section suppression of magnetizing inrush current of a traction transformer, comprising:

an acquisition module (70) configured to acquire a first phase angle, a second phase angle and an off moment of a first power electronic switch corresponding to a first feeding section; wherein the first phase angle is a phase angle of a voltage of a second feeding section that is lagging behind a phase angle of a voltage of the first feeding section, and the second phase angle is a phase angle of a primary current of the traction transformer that is lagging behind the phase angle of the voltage of the first feeding section when a locomotive is powered by the first feeding section,

a first determination module (71) configured to determine a no-power time interval of the traction transformer according to the first phase angle, the second phase angle and a preset magnetic flux variable threshold, comprises: S10, determining a per-unit value of magnetic flux variable quantity of the traction transformer corresponding to the on moment of the second power electronic switch, according to the first phase angle, the second phase angle and a set prediction no-power time interval; S20, returning to the S10 after the prediction no-power time interval is added with a preset iterative incremental duration and is updated, in a case where the per-unit value of magnetic flux variable quantity of the traction transformer is greater than a preset magnetic flux variable threshold; and S30, taking the prediction no-power time interval as the no-power time interval, if the per-unit value of magnetic flux variable quantity of the traction transformer is less than or equal to the preset magnetic flux variable threshold; and

a second determination module (72) configured to determine a on moment of a second power electronic switch corresponding to the second feeding section according to the off moment of the first power electronic switch and the no-power time interval, such that a magnetic flux of the traction transformer is located within a preset magnetic flux range in a case where the second power electronic switch is on;

wherein the preset magnetic flux range is determined according to a maximum tolerable magnetizing inrush current of the traction transformer.

7. A device for ground passing neutral section suppression of magnetizing inrush current of a traction transformer, comprising: an acquisition module (70), a memory and a processor;

wherein a computer program is stored on the memory, and when the computer program is executed by the processor, said device being configured to execute the steps of the method for ground passing neutral section suppression of magnetizing inrush current of a traction transformer according to any one of claims 1 to 5.

8. A ground passing neutral section system, comprising: an acquisition device, at least one ground passing neutral section apparatus and the device for ground passing neutral section suppression of magnetizing inrush current of a traction transformer according to claim 7;

wherein each ground passing neutral section apparatus comprises a first feeding section, a second feeding section, a first power electronic switch, and a second power electronic switch;

the acquisition device is configured to acquire a voltage of the first feeding section, a voltage of the second feeding section and a primary current of the traction transformer; and

the device for ground passing neutral section suppression of magnetizing inrush current of the traction transformer is configured to implement steps of the method for ground passing neutral section suppression of magnetizing inrush current of a traction transformer according to any one of claims 1 to 5.

9. A storage medium on which a computer program is stored, and when the computer program is executed by a processor, causes the device according to claim 7 to execute the steps of the method for ground passing neutral section suppression of magnetizing inrush current of a traction transformer according to any one of claims 1 to 5.

**Patentansprüche**

1. Verfahren zur Unterdrückung einer über Masse gehenden spannungslosen Trennstrecke eines magnetisierenden Einschaltstromstoßes eines Traktionstransformators, umfassend:

Erfassen eines ersten Phasenwinkels, eines zweiten Phasenwinkels und eines Ausschaltmoments eines ersten elektronischen Leistungsschalters, die einem ersten Einspeiseabschnitt entsprechen, wobei der erste Phasenwinkel ein Phasenwinkel einer Spannung eines zweiten Einspeiseabschnitts ist, der einem Phasenwinkel einer Spannung eines ersten Einspeiseabschnitts nacheilt, und der zweite Phasenwinkel ein Phasenwinkel eines Primärstroms des Traktionstransformators ist, der dem Phasenwinkel der Spannung des ersten Einspeiseabschnitts nacheilt, wenn eine Lokomotive von dem ersten Einspeiseabschnitt mit Energie versorgt wird; Bestimmen eines energielosen Zeitintervalls des Traktionstransformators gemäß dem ersten Phasenwinkel, dem zweiten Phasenwinkel und einer voreingestellten variablen Magnetflussschwelle; und

Bestimmen eines Einschaltmoments eines zweiten elektronischen Leistungsschalters, der dem zweiten Einspeiseabschnitt entspricht, gemäß dem Ausschaltmoment des ersten elektronischen Leistungsschalters und dem energielosen Zeitintervall, so dass sich ein Magnetfluss des Traktionstransformators innerhalb eines voreingestellten Magnetflussbereichs befindet, für den Fall, dass der zweite elektronische Leistungsschalter eingeschaltet ist;

wobei der voreingestellte Magnetflussbereich gemäß einem maximal tolerierbaren magnetisierenden Einschaltstromstoß des Traktionstransformators bestimmt wird;

**dadurch gekennzeichnet, dass** das Bestimmen eines energielosen Zeitintervalls des Traktionstransformators gemäß dem ersten Phasenwinkel, dem zweiten Phasenwinkel und einer voreingestellten variablen Magnetflussschwelle umfasst:

S10, Bestimmen eines normierten Wertes einer variablen Magnetflussmenge des Traktionstransformators, die dem Einschaltmoment des zweiten elektronischen Leistungsschalters entspricht, gemäß dem ersten Phasenwinkel, dem zweiten Phasenwinkel und einem eingestellten vorhergesagten energielosen Zeitintervall;

S20, Zurückkehren zu S10, nachdem zu dem vorhergesagten energielosen Zeitintervall eine voreingestellte iterative inkrementelle Dauer hinzugefügt wurde und es aktualisiert wurde, für den Fall, dass der normierte Wert der variablen Magnetflussmenge des Traktionstransformators größer als eine voreingestellte variable Magnetflussschwelle ist; und

S30, Übernehmen des vorhergesagten energielosen Zeitintervalls als das energielose Zeitintervall, falls der normierte Wert der variablen Magnetflussmenge des Traktionstransformators kleiner oder gleich der voreingestellten variablen Magnetflussschwelle ist.

2. Verfahren zur Unterdrückung einer über Masse gehenden spannungslosen Trennstrecke eines magnetisierenden Einschaltstromstoßes des Traktionstransformators nach Anspruch 1, wobei
das Bestimmen eines normierten Wertes einer variablen Magnetflussmenge des Traktionstransformators, die dem Einschaltmoment des zweiten elektronischen Leistungsschalters entspricht, gemäß dem ersten Phasenwinkel, dem zweiten Phasenwinkel und einem eingestellten vorhergesagten energielosen Zeitintervall umfasst:
Eingeben des ersten Phasenwinkels, des zweiten Phasenwinkels und des vorhergesagten energielosen Zeitintervalls in eine vorformulierte Berechnungsformel für den normierten Wert der variablen Magnetflussmenge, um den normierten Wert der variablen Magnetflussmenge des Traktionstransformators zu erzielen.

3. Verfahren zur Unterdrückung einer über Masse gehenden spannungslosen Trennstrecke eines magnetisierenden Einschaltstromstoßes des Traktionstransformators nach Anspruch 2, wobei die Berechnungsformel für den normierten Wert der variablen Magnetflussmenge wie folgt ist:

$$|\emptyset_0|_{pu} = \left| \cos\left( \omega t_0 - \alpha_{AB} + 2\pi \frac{t_{no}}{T_s} \right) - \cos(\omega_0) \right|$$

wobei $\omega t_0 = \varphi_A$ oder $\omega t_0 = \pi + \varphi_A$,
wobei $|\emptyset_0|_{pu}$ der normierte Wert der variablen Magnetflussmenge des Traktionstransformators ist, $t_0$ der Ausschaltmoment des ersten elektronischen Leistungsschalters ist, $\alpha_{AB}$ der erste Phasenwinkel ist, $t_{no}$ das vorhergesagte energielose Zeitintervall ist, $T_s$ eine Grundperiode der Stromnetzspannung ist, und $\varphi_A$ der zweite Phasenwinkel ist.

4. Verfahren zur Unterdrückung einer über Masse gehenden spannungslosen Trennstrecke eines magnetisierenden Einschaltstromstoßes des Traktionstransformators nach Anspruch 1, wobei die variable Magnetflussschwelle 0,5 beträgt.

5. Verfahren zur Unterdrückung einer über Masse gehenden spannungslosen Trennstrecke eines magnetisierenden Einschaltstromstoßes des Traktionstransformators nach Anspruch 1, wobei der erste Phasenwinkel einen Wertebereich von [-π, +π] aufweist.

6. Gerät zur Unterdrückung einer über Masse gehenden spannungslosen Trennstrecke eines magnetisierenden Einschaltstromstoßes eines Traktionstransformators, umfassend:

ein Erfassungsmodul (70), das dazu konfiguriert ist, einen ersten Phasenwinkel, einen zweiten Phasenwinkel und einen Ausschaltmoment eines ersten elektronischen Leistungsschalters zu erfassen, die einem ersten Einspeiseabschnitt entsprechen; wobei der erste Phasenwinkel ein Phasenwinkel einer Spannung eines zweiten Einspeiseabschnitts ist, der einem Phasenwinkel einer Spannung des ersten Einspeiseabschnitts nacheilt, und der zweite Phasenwinkel ein Phasenwinkel eines Primärstroms des Traktionstransformators ist, der dem Phasenwinkel der Spannung des ersten Einspeiseabschnitts nacheilt, wenn eine Lokomotive von dem ersten Einspeiseabschnitt mit Energie versorgt wird,

ein erstes Bestimmungsmodul (71), das dazu konfiguriert ist, ein energieloses Zeitintervall des Traktionstransformators gemäß dem ersten Phasenwinkel, dem zweiten Phasenwinkel und einer voreingestellten variablen Magnetflussschwelle zu bestimmen, umfassend: S10, Bestimmen eines normierten Wertes einer variablen Magnetflussmenge des Traktionstransformators, die dem Einschaltmoment des zweiten elektronischen Leistungsschalters entspricht, gemäß dem ersten Phasenwinkel, dem zweiten Phasenwinkel und einem eingestellten vorhergesagten energielosen Zeitintervall; S20, Zurückkehren zu S10, nachdem zu dem vorhergesagten energielosen Zeitintervall eine voreingestellte iterative inkrementelle Dauer hinzugefügt wurde und es aktualisiert wurde, für den Fall, dass der normierte Wert einer variablen Magnetflussmenge des Traktionstransformators größer als eine voreingestellte variable Magnetflussschwelle ist; und S30, Übernehmen des vorhergesagten energielosen Zeitintervalls als das energielose Zeitintervall, falls der normierte Wert einer variablen Magnetflussmenge des Traktionstransformators kleiner oder gleich der voreingestellten variablen Magnetflussschwelle ist; und

ein zweites Bestimmungsmodul (72), das dazu konfiguriert ist, ein Einschaltmoment eines zweiten elektronischen Leistungsschalters, das dem zweiten Einspeiseabschnitt entspricht, gemäß dem Ausschaltmoment des ersten elektronischen Leistungsschalter und dem energielosen Zeitintervall zu bestimmen, so dass sich ein Magnetfluss des Traktionstransformators innerhalb eines voreingestellten Magnetflussbereichs befindet, für den Fall, dass der zweite elektronische Leistungsschalter eingeschaltet ist;

wobei der voreingestellte Magnetflussbereich gemäß einem maximal tolerierbaren magnetisierenden Einschaltstromstoß des Traktionstransformators eingestellt ist.

7. Vorrichtung zur Unterdrückung einer über Masse gehenden spannungslosen Trennstrecke eines magnetisierenden Einschaltstromstoßes eines Traktionstransformators, umfassend: ein Erfassungsmodul (70), einen Speicher und einen Prozessor;

wobei ein Computerprogramm in dem Speicher gespeichert ist, und wenn das Computerprogramm von dem Prozessor ausgeführt wird, die Vorrichtung dazu konfiguriert ist, die Schritte des Verfahrens zur Unterdrückung einer über Masse gehenden spannungslosen Trennstrecke eines magnetisierenden Einschaltstromstoßes eines Traktionstransformators nach einem der Ansprüche 1 bis 5 auszuführen.

8. Über Masse gehendes spannungslosen Trennstreckensystem, umfassend: eine Erfassungsvorrichtung, mindestens ein über Masse gehendes spannungsloses Trennstreckengerät und die Vorrichtung zur Unterdrückung einer über Masse gehenden spannungslosen Trennstrecke eines magnetisierenden Einschaltstromstoßes eines Traktionstransformators nach Anspruch 7;

wobei jedes über Masse gehende spannungslose Trennstreckengerät einen ersten Einspeiseabschnitt, einen zweiten Einspeiseabschnitt, einen ersten elektronischen Leistungsschalter und einen zweiten elektronischen Leistungsschalter umfasst;

die Erfassungsvorrichtung dazu konfiguriert ist, eine Spannung des ersten Einspeiseabschnitts, eine Spannung des zweiten Einspeiseabschnitts und einen Primärstrom des Traktionstransformators zu erfassen; und

die Vorrichtung zur Unterdrückung einer über Masse gehenden spannungslosen Trennstrecke eines magnetisierenden Einschaltstromstoßes des Traktionstransformators dazu konfiguriert ist, die Schritte des Verfahrens zur Unterdrückung einer über Masse gehenden spannungslosen Trennstrecke eines magnetisierenden Einschaltstromstoßes eines Traktionstransformators nach einem der Ansprüche 1 bis 5 umzusetzen.

9. Speichermedium, auf dem ein Computerprogramm gespeichert ist, und das, wenn das Computerprogramm von einem Prozessor ausgeführt wird, bewirkt, dass die Vorrichtung nach Anspruch 7 die Schritte des Verfahrens zur Unterdrückung einer über Masse gehenden spannungslosen Trennstrecke eines magnetisierenden Einschaltstromstoßes eines Traktionstransformators nach einem der Ansprüche 1 bis 5 ausführt.

**Revendications**

1. Procédé de suppression dans la section neutre passant par la terre du courant d'appel de magnétisation d'un transformateur de traction, comprenant :

l'acquisition d'un premier angle de phase, d'un deuxième angle de phase et d'un instant de blocage d'un premier interrupteur électronique de puissance correspondant à une première section d'alimentation, dans lequel le premier angle de phase est un angle de phase d'une tension d'une deuxième section d'alimentation qui est en retard par rapport à un angle de phase d'une tension d'une première section d'alimentation et le deuxième angle de phase est un angle de phase d'un courant primaire du transformateur de traction qui est en retard par rapport à l'angle de phase de la tension de la première section d'alimentation lorsqu'une locomotive est alimentée par la première section d'alimentation ;

la détermination d'un intervalle de temps sans alimentation du transformateur de traction, en fonction du premier angle de phase, du deuxième angle de phase et d'un seuil variable de flux magnétique prédéfini ; et

la détermination d'un instant de conduction d'un deuxième interrupteur électronique de puissance correspondant à la deuxième section d'alimentation, en fonction de l'instant de blocage du premier interrupteur électronique de puissance et de l'intervalle de temps sans alimentation, de sorte qu'un flux magnétique du transformateur de traction se situe dans une plage de flux magnétique prédéfinie dans un cas où le deuxième interrupteur électronique de puissance est sous tension ;

dans lequel la plage de flux magnétique prédéfinie est déterminée en fonction d'un courant d'appel de magnétisation maximal tolérable du transformateur de traction ;

**caractérisé en ce que**

la détermination d'un intervalle de temps sans alimentation du transformateur de traction, en fonction du premier angle de phase, du deuxième angle de phase et d'un seuil variable de flux magnétique prédéfini comprend :

S10, la détermination d'une valeur par unité de la quantité variable de flux magnétique du transformateur de traction correspondant à l'instant de conduction du deuxième interrupteur électronique de puissance, en fonction du premier angle de phase, du deuxième angle de phase et d'un intervalle de temps sans alimentation prédit défini ;

S20, le retour à S10 après que l'intervalle de temps sans alimentation prédit a été ajouté avec une durée incrémentale itérative prédéfinie et a été mis à jour, dans un cas où la valeur par unité de la quantité variable de flux magnétique du transformateur de traction est supérieure à un seuil variable de flux magnétique prédéfini et

S30, la prise en compte de l'intervalle de temps sans alimentation prédit comme intervalle de temps sans alimentation, si la valeur par unité de la quantité variable de flux magnétique du transformateur de traction est inférieure ou égale au seuil variable de flux magnétique prédéfini.

2. Procédé de suppression dans la section neutre passant par la terre du courant d'appel de magnétisation d'un transformateur de traction selon la revendication 1, dans lequel

la détermination d'une valeur par unité de la quantité variable de flux magnétique du transformateur de traction correspondant à l'instant de conduction du deuxième interrupteur électronique de puissance, en fonction du premier angle de phase, du deuxième angle de phase et d'un intervalle de temps sans alimentation prédit défini, comprend :

l'entrée du premier angle de phase, du deuxième angle de phase et de l'intervalle de temps sans alimentation prédit dans une formule de calcul préétablie pour la valeur par unité de la quantité variable de flux magnétique, afin d'obtenir la valeur par unité de la quantité variable de flux magnétique du transformateur de traction.

3. Procédé de suppression dans la section neutre passant par la terre du courant d'appel de magnétisation d'un transformateur de traction selon la revendication 2, dans lequel la formule de calcul de la valeur par unité de la quantité variable de flux magnétique est la suivante :

$$|\emptyset_0|_{pu} = \left| cos\left( \omega t_0 - \alpha_{AB} + 2\pi \frac{t_{no}}{T_s} \right) - cos(\omega_0) \right|$$

dans lequel $\omega t_0 = \phi_A$ ou $\omega t_0 = \pi + \phi_A$,

dans lequel $|\emptyset_0|_{pu}$ est la valeur par unité de la quantité variable de flux magnétique du transformateur de traction, $t_0$ est l'instant de blocage du premier interrupteur électronique de puissance, $\alpha_{AB}$ est le premier angle de phase, $t_{no}$ est l'intervalle de temps sans alimentation prédit, $T_s$ est une période fondamentale de la tension du réseau d'alimentation, et $\varphi_A$ est le deuxième angle de phase.

4. Procédé de suppression dans la section neutre passant par la terre du courant d'appel de magnétisation d'un transformateur de traction selon la revendication 1, dans lequel le seuil variable de flux magnétique est de 0,5.

5. Procédé de suppression dans la section neutre passant par la terre du courant d'appel de magnétisation d'un transformateur de traction selon la revendication 1, dans lequel le premier angle de phase a une plage de valeurs de $[-\pi, +\pi]$.

6. Appareil de suppression dans la section neutre passant par la terre du courant d'appel de magnétisation d'un transformateur de traction, comprenant :

un module d'acquisition (70) configuré pour acquérir un premier angle de phase, un deuxième angle de phase et un instant de blocage d'un premier interrupteur électronique de puissance correspondant à une première section d'alimentation ; dans lequel le premier angle de phase est un angle de phase d'une tension d'une deuxième section d'alimentation qui est en retard par rapport à un angle de phase d'une tension de la première section d'alimentation et le deuxième angle de phase est un angle de phase d'un courant primaire du transformateur de traction qui est en retard par rapport à l'angle de phase de la tension de la première section d'alimentation lorsqu'une locomotive est alimentée par la première section d'alimentation ;
un premier module de détermination (71) configuré pour déterminer un intervalle de temps sans alimentation du transformateur de traction en fonction du premier angle de phase, du deuxième angle de phase et d'un seuil variable de flux magnétique prédéfini comprend : S10, la détermination d'une valeur par unité de la quantité variable de flux magnétique du transformateur de traction correspondant à l'instant de conduction du deuxième interrupteur électronique de puissance, en fonction du premier angle de phase, du deuxième angle de phase et d'un intervalle de temps sans alimentation prédit défini ; S20, le retour à S10 après que l'intervalle de temps sans alimentation prédit a été ajouté avec une durée incrémentale itérative prédéfinie et a été mis à jour, dans un cas où la valeur par unité de la quantité variable de flux magnétique du transformateur de traction est supérieure à un seuil variable de flux magnétique prédéfini ; et S30, la prise en compte de l'intervalle de temps sans alimentation prédit comme intervalle de temps sans alimentation, si la valeur par unité de la quantité variable de flux magnétique du transformateur de traction est inférieure ou égale au seuil variable de flux magnétique prédéfini ; et
un deuxième module de détermination (72) configuré pour déterminer un instant de conduction d'un deuxième interrupteur électronique de puissance correspondant à la deuxième section d'alimentation, en fonction de l'instant de blocage du premier interrupteur électronique de puissance et de l'intervalle de temps sans alimentation, de sorte qu'un flux magnétique du transformateur de traction soit situé dans une plage de flux magnétique prédéfinie dans un cas où le deuxième interrupteur électronique de puissance est sous tension ;
dans lequel la plage de flux magnétique prédéfinie est déterminée en fonction d'un courant d'appel de magnétisation maximal tolérable du transformateur de traction.

7. Dispositif de suppression dans la section neutre passant par la terre du courant d'appel de magnétisation d'un transformateur de traction, comprenant :

un module d'acquisition (70) ;
une mémoire et un processeur ;
dans lequel un programme informatique est mémorisé en mémoire et lorsque le programme informatique est exécuté par le processeur, ledit dispositif est configuré pour exécuter les étapes du procédé de suppression dans la section neutre passant par la terre du courant d'appel de magnétisation d'un transformateur de traction selon une quelconque des revendications 1 à 5.

8. Système de section neutre passant par la terre, comprenant : un dispositif d'acquisition, au moins un appareil de section neutre passant par la terre et le dispositif de suppression du courant d'appel de magnétisation d'un transformateur de traction dans la section neutre passant par la terre, selon la revendication 7 ;

dans lequel chaque appareil de section neutre passant par la terre comprend une première section d'alimentation, une deuxième section d'alimentation, un premier interrupteur électronique de puissance et un deuxième interrupteur électronique de puissance ;
le dispositif d'acquisition est configuré pour acquérir la tension de la première section d'alimentation, une tension de la deuxième section d'alimentation et un courant primaire du transformateur de traction ; et
le dispositif de suppression dans la section neutre passant par la terre du courant d'appel de magnétisation d'un transformateur de traction est configuré pour mettre en œuvre les étapes du procédé de suppression dans la section neutre passant par la terre du courant d'appel de magnétisation d'un transformateur de traction selon une quelconque des revendications 1 à 5.

9. Support de mémorisation sur lequel est mémorisé un programme informatique, et lorsque le programme informatique est exécuté par un processeur, amène le dispositif selon la revendication 7 à exécuter les étapes du procédé de suppression dans la section neutre passant par la terre du courant d'appel de magnétisation d'un transformateur de traction selon une quelconque des revendications 1 à 5.

**Fig. 1**

**Fig. 2**

Acquire a first phase angle of the voltage of a second feeding section that is lagging behind a phase of the voltage of a first feeding section, a second phase angle of the voltage of a primary current of the traction transformer that is lagging behind the phase of the voltage of the first feeding section when a locomotive is powered by the first feeding section and an off moment of a first power electronic switch corresponding to the first feeding section

~300

Determine a no-power time interval of the traction transformer according to the first phase angle, the second phase angle and a preset magnetic flux variable threshold

~301

Determine an on moment of a second power electronic switch corresponding to the second feeding section according to the off moment of the first power electronic switch and the no-power time interval, such that the magnetic flux of the traction transformer is located within a preset magnetic flux range when the second feeding section is on

~302

Fig. 3

```
                          ┌─────────┐
                          │  Start  │
                          └────┬────┘
                               │
                               ▼
          ┌──────────────────────────────────────┐
   400 ～  │ λ_pu and t_step are given,            │
          │ and t_no is initialized as 0          │
          └──────────────────┬───────────────────┘
                             │                              ◄──────────┐
                             ▼                                         │
          ┌────────────────────────────┐                              │
   401 ～  │   Detect α_AB, φ_A         │                              │
          └──────────────┬─────────────┘         ┌──────────────────┐ │
                         ▼                        │ t_no = t_no +     │ │
          ┌────────────────────────────┐          │       t_step      │─～405
   402 ～  │   Calculate |φ_0|_pu        │         └──────────────────┘ │
          └──────────────┬─────────────┘                   ▲           │
                         ▼                                  │           │
                    ◆◆◆◆◆◆◆◆◆◆◆◆            No              │           │
   403 ～        ◆   |φ_0|_pu ≤ λ_pu   ◆ ──────────────────────────────┘
                    ◆◆◆◆◆◆◆◆◆◆◆◆
                         │ Yes
                         ▼
          ┌────────────────────────────┐
   404 ～  │     Output t_no            │
          └──────────────┬─────────────┘
                         ▼
                    ┌─────────┐
                    │   End   │
                    └─────────┘
```

**Fig. 4**

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10271610 A